# EUROPEAN PATENT APPLICATION

(11) **EP 1 860 797 A1**
(43) Date of publication of application: **28.11.2007**
(21) Application number: 05720707.8
(22) Date of filing: 14.03.2005
(51) Int. Cl.: H04B 7/26

(54) **TRANSMISSION POWER CONTROL METHOD, MOBILE STATION, FIXED STATION, AND COMMUNICATION SYSTEM**

(71) Applicant: MITSUBISHI DENKI KABUSHIKI KAISHA, Chiyoda-ku, Tokyo 100-8310 (JP)
(72) Inventor: NIWANO, Kazuhito, Mitsubishi Denki K. K., Tokyo, 100-8310 (JP)
(74) Representative: Sajda, Wolf E.
(86) International application number: PCT/JP2005/004436
(87) International publication number: WO 2006/097986

(57) **Abstract**

When a mobile station transmitting a plurality of channels having different transmission timings such as a DPDCH and a HS-DPCCH in uplink measures transmission power over a transmission power measurement period with a slot of the DPDCH as a reference, the transmission timing difference between the channels affects the accuracy of the transmission power measurement.

In the present invention, therefore, a transmission power measurement period is changed depending on transmission timings of the uplink channels such as the DPDCH and the HS-DPCCH, the presence or absence of the HS-DPCCH in addition to the DPDCH, or specifications (version) of the standard applied to the mobile station.

## Description

### Technical Field

The present invention relates to transmission power control of a mobile radio communication terminal, and particularly to control of a transmission power estimate (measurement) period.

### Background Art

Communication standards called 3rd Generation have recently been adopted as IMT-2000 by the ITU (International Telecommunication Union). Commercial service of W-CDMA (FDD) (Wideband-Code Division Multiple Access: Frequency Division Duplex), a type of the IMT-2000 standards, has been offered in Japan since 2001. The W-CDMA (FDD) system was originally intended to achieve a maximum communication speed of approximately 2 Mbps (Mega bit per sec), with Release 1999 (or Version 3.x.x) finalized by the standardization organization 3GPP (3rd Generation Partnership Project) in 1999 as its first specifications (version).

With the proliferation of the Internet, there is a demand for faster packet data transfer in downlink (i.e. communication from a base station side to a mobile station). Consideration was therefore given to HSDPA (High Speed Downlink Packet Access) in order to increase data transfer speeds by adding new special channels in addition to the Release 1999-defined channels. The resultantly created Release 5 (or Version 5.x.x) is a new version of the 3GPP standards that maintains backward compatibility with Release 1999.

The formats and transmission/reception timings of various channels of a physical layer in Release 5 are defined in detail in a technical specification TS 25.211 (Non-Patent Document 1: Chapter 5.2 Uplink physical channels and Chapter 5.3 Downlink physical channels, Chapter 6.2 Association of physical channels and physical signals, Chapter 7 Timing relationship between physical channels). Processing (coding, multiplexing, and so forth) in the physical layer on input data from a transport layer is defined in detail in TS 25.212 (Non-Patent Document 2: Chapter 4.5 Coding for HS-DSCH, Chapter 4.6 Coding for HS-SCCH). A method of multiplexing channels is defined in detail in TS 25.213 (Non-Patent Document 3: Chapter 4 Uplink spreading and modulation, Chapter 5 Downlink spreading and modulation). Various channels of a physical layer in Release 1999 are discussed by being included in Release 5.

Non-patent Document 1: 3rd Generation Partnership Project; Technical Specification Group Radio Access Network; Physical channels and mapping of transport channels onto physical channels (FDD) (Release 5) 3GPP TS 25.211 V5.6.0 (2004-09)

Non-patent Document 2: 3rd Generation Partnership Project; Technical Specification Group Radio Access Network; Multiplexing and channel coding (FDD) (Release 5) 3GPP TS 25.212 V5.9.0 (2004-09)

Non-patent Document 3: 3rd Generation Partnership Project; Technical Specification Group Radio Access Network; Spreading and modulation (FDD) (Release 5) 3GPP TS 25.213 V5.5.0 (2004-09)

The main channels will now be described. A DPCCH (Dedicated Physical Control CHannel) and a DPDCH (Dedicated Physical Data CHannel) are Release 1999-compliant physical layer channels allocated to each mobile station. The DPCCH transmits various kinds of control information (e.g. a synchronizing pilot signal, a transmission power control signal) in the physical layer. The DPDCH transmits various kinds of data from a MAC layer (Media Access Control: a protocol layer above the physical layer). A channel used for data transfer between the MAC layer and the physical layer is called a transport channel. The DPCCH and DPDCH are set both in uplink and downlink.

A HS-PDSCH (High Speed Physical Downlink Shared CHannel) and a HS-SCCH (High Speed Shared Control CHannel) are physical layer channels in downlink added in Release 5, both of which are used by a plurality of mobile stations. Like the Release 1999-compliant DPDCH, the HS-PDSCH transmits data from an upper layer, namely, the MAC layer. The HS-SCCH transmits control information (e.g. a modulation scheme of transmission data, a packet data size) in transmitting data through the HS-PDSCH. The HS-PDSCH has a fixed spreading factor of 16, which allows a plurality of spreading codes (i.e. a plurality of channels) to be allocated to a single mobile station with one-time packet transmission. The allocation control (so-called scheduling) takes place on the base station side.

A HS-DPCCH (High Speed Dedicated Physical Control CHannel) is a physical layer channel in uplink added in Release 5. The HS-DPCCH transmits a response (ACK/NACK) to data sent through the HS-PDSCH, and downlink radio environment information (CQI: Channel Quality Information).

The base station transmits the HS-SCCH and the HS-PDSCH as a pair. The mobile station receives the HS-SCCH and the HS-PDSCH from the base station, determines the presence of error in the data, and transmits the determination result (ACK/NACK) through the HS-DPCCH. Thus the transmission frequency of the ACK/NACK depends on the frequency of downlink packet transmission. The CQI is transmitted to the base station in accordance with the value of a cycle set in advance of the communication.

A technical specification TS 25.308 (Non-Patent Document 4: Chapter 5.2.2.1 FDD Downlink Physical layer Model) states that the maximum number of HS-SCCHs mobile stations are capable of receiving simultaneously is four. The actual number of allocated channels (≦4) is predetermined when HSDPA channels are established between the base station and mobile stations, or a change in the number is notified to the mobile stations during communication. Note that the number of HS-SCCHs used for transmission at one-time data transmission timing is one. Further, TS 25.214 (Non-Patent Document 5: Chapter 6A.1.1 UE procedure for receiving HS-DSCH) states that the base station uses the same HS-SCCH in transmitting packets successively.

Non-patent Document 4: 3rd Generation Partnership Project; Technical Specification Group Radio Access Network; High Speed Downlink Packet Access (HSDPA); Overall description; Stage 2 (Release 5) 3GPP TS 25.308 V.5.6.0 (2004-09)

Non-patent Document 5: 3rd Generation Partnership Project; Technical Specification Group Radio Access Network; Physical layer procedures (FDD) (Release 5) 3GPP TS 25.214 V5.9.0 (2004-09)

A channel called a common pilot channel (CPICH) is transmitted at all times in a cell, which is a communication range of each base station. This channel is shared by all mobile stations in the cell, and serves as a reference for the various kinds of channels used by the base station and mobile stations. The transmission timing reference of the DPCCH and the DPDCH among the downlink channels of each mobile station in the cell is set by a time offset (τDPCH) with the transmission timing of the CPICH as a reference. The time offset is designated by a base station control device (RNC: Radio Network Controller) and notified to each base station and each mobile station such that the transmission timing varies among mobile stations. Meanwhile, the transmission timing reference of the HS-PDSCH, which is a common channel to all mobile stations, is set to be identical to all mobile stations. The HS-PDSCH is thus transmitted in synchronization with the timing of the CPICH.

The uplink DPCCH and DPDCH are transmitted with timing settings determined by a prescribed transmission/reception timing difference with respect to the downlink DPDCH and DPCCH. The transmission timing of the uplink DPCCH and DPDCH thus varies among mobile stations. Meanwhile, the transmission timing of the HS-DPCCH, which needs to be coordinated with the transmission timing of packet data through the HS-PDSCH, is determined with the CPICH as an equivalent reference. The reference timing of the HS-DPCCH is thus set to be identical to all mobile stations, except radio-wave propagation time determined by a mobile station or a propagation path.

The transmission timing relationship between the uplink DPCCH/DPDCH and the HS-DPCCH is illustrated in the technical specification TS 25.211 (Non-Patent Document 1), Chapter 7.7 "Uplink DPCCH/HS-DPCCH/HS-PDSCH timing at the UE", Fig. 34. In Fig. 34, the "Uplink DPCH" indicates the timing of the DPCCH/DPDCH ("DPCH" is the name of a transport channel). As can be understood from the above description, the DPCCH and DPDCH, and the HS-DPCCH in uplink have different reference timings for transmission. The result is that one of them is transmitted while covering an interval of the transmission timing (transmission period) of the other, with a different way of covering (= a timing difference) in each mobile station.

### Disclosure of Invention

### Problems to be Solved by the Invention

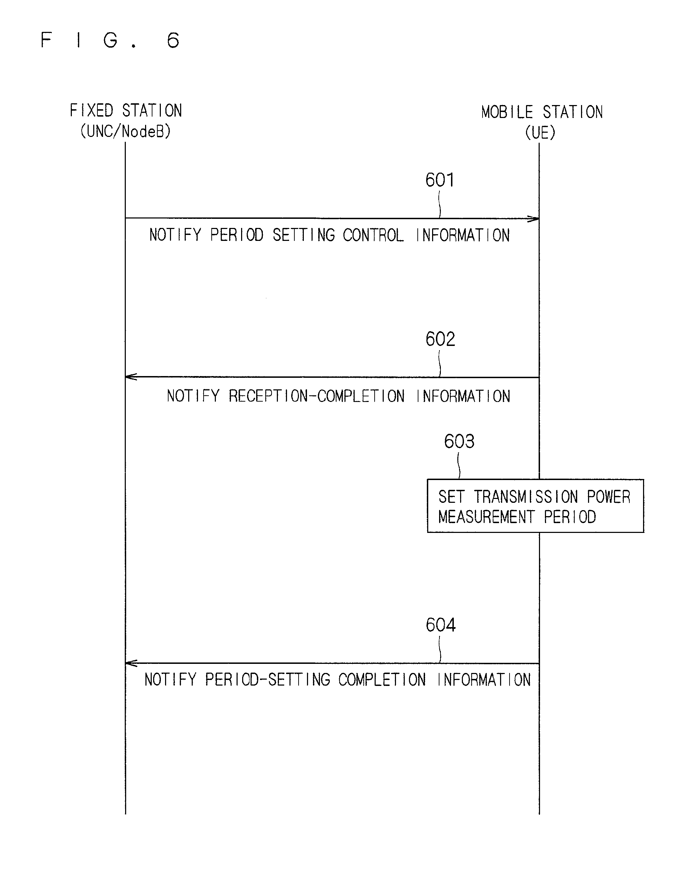

Problems associated with the transmission of uplink channels will be described. The DPDCH increases or decreases in transmission power depending on the data transmission speed. Thus, a technical specification TS 25.101 (Non-Patent Document 6: Chapter 6.5, Fig. 6.2 to Fig. 6.5) defines, as a time mask, requirements and measurement conditions for transition over time in transmission power of the DPDCH alone. The so-called closed loop transmission power control (TPC) equally applied to all transmission channels will not be taken into consideration.
The HS-DPCCH varies in the amount of offset of its transmission power depending on the contents of transmission (ACK, NACK, CQI), and so varies in transmission power depending on the contents of transmission. Thus like the transition of the DPDCH, the above technical specification (Chapter 6.5, Fig. 6.5A and Fig. 6.5B) defines requirements and measurement conditions for transition over time in transmission power of the HS-DPCCH alone. Such requirements are not provided to the DPCCH due to its constant transmission speed.

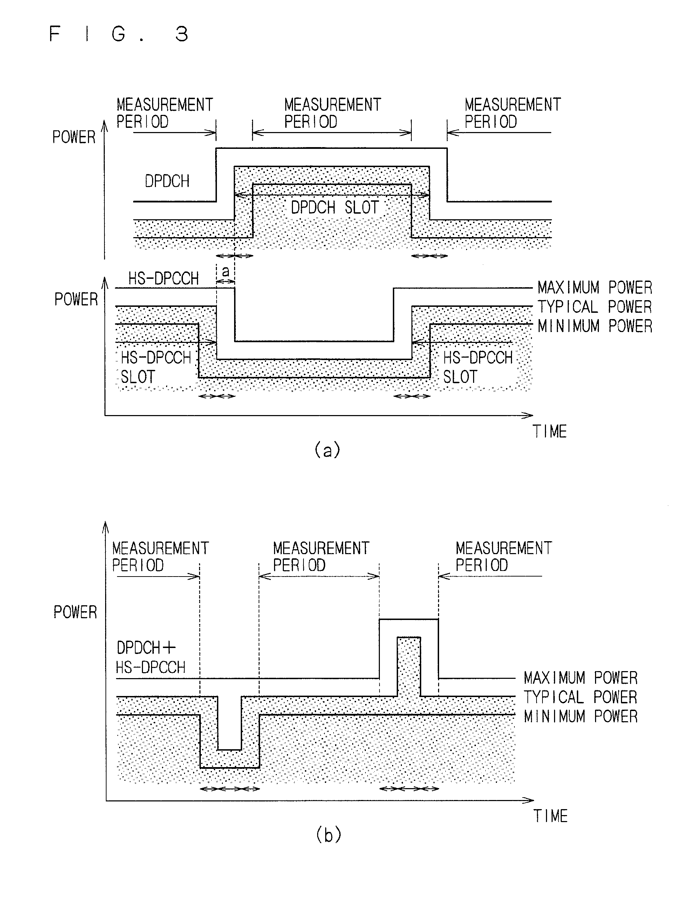

The time mask of each transmission power is defined with a typical power value (as indicated by "TYP" in Fig. 3 described later), a maximum power value ("UPPER" in Fig. 3), and a minimum power value ("LOWER" in Fig. 3). In addition, a period of 25 µs before and after the transmission timing reference (slot transmission period) is defined as transition time. The amount of change in transmission power between unit of time periods (one slot: one-fifteenth of 10 ms) before and after the transmission timing reference is defined based on an estimate (or measurement) of average power over each period excluding the transition times, as the amount of change (namely, the amount of difference) in average power over both periods (see the above technical specification, Table 6.7).

Non-patent Document 6: 3rd Generation Partnership Project; Technical Specification Group Radio Access Network; User Equipment (UE) radio transmission and reception (FDD) (Release 5) 3GPP TS 25.101 V.5.12.0 (2004-09)

The technical specifications cited above provide requirements about transmission power transition individually for the DPDCH and the HS-DPCCH, but do not provide requirements about total transmission power transition of a mobile station transmitting the DPDCH and the HS-DPCCH. During the actual transmission by a mobile station, peak power may vary with the same period-average power depending on the presence or absence of transmission of the DPDCH and the HS-DPCCH, or the timing relationship between the two channels. Assume that pulse peak power is greater than measured (or estimated) average power over periods, and that the value of the average power is in the vicinity of a maximum transmission power value (hereafter indicated as "Pmax") by TPC control.
In controlling the total transmission power within a prescribed maximum transmission power value, the average power over a transmission power measurement period is measured once in each slot, just like the measurement of transmission power of the DPDCH and the HS-DPCCH. A strongly nonlinear region in the input/output characteristics of an amplifier provided with the mobile station is used during pulse-like time. The conventional standards define a transmission power measurement period of a mobile station based on the transmission timing of a slot of the DPCH (DPCCH or DPDCH) in a fixed manner. The resulting problem is that the operation of controlling the total transmission power varies among mobile stations depending on a timing difference between the DPDCH and the HS-DPCCH in each mobile station.

Further, when all channels are transmitted at the same timing by a Release 1999-compliant mobile station, or when a Release 5-compliant mobile station does not transmit the HS-DPCCH, the period-average power is of equal value to peak power, and no step-like change in transmission power exists in one slot. This only requires one-time transmission power measurement and transmission power control per slot. A communication control method and communication device for conventional transmission power control are discussed in Japanese Patent Application Laid-Open Nos. 2001-308723 and 8-32515, for example. When a channel (HS-DPCCH) having a different transmission timing reference is transmitted, period-average power has a different value from peak power, and the transmission power may reach its peak during transition time, resulting in reduced accuracy of transmission power control.

Patent Document 1: Japanese Patent Application Laid-Open No. 2001-308723

Patent Document 2: Japanese Patent Application Laid-Open No. 8-32515

Next, transmission power control of a mobile station is described. A mobile station makes evaluations based on the average power over a transmission power measurement period and a channel amplitude coefficient (gain factor: βd, βc, βhs) of each channel, to determine data transmission speed setting (TFC: Transport Format Combination) (TFC selection). If a maximum transmission power state continues for a prescribed number of slots, the mobile station selects a TFC in such a manner that reduces usable transmission speed, thus reducing the transmission power. Such transmission power control is defined in a technical specification TS 25.133 (Non-Patent Document 7: Chapter 6.4 Transport format combination selection in UE).
Since the transmission power measurement period is defined based on the slot of the DPDCH as described above, evaluation to determine whether the average power over a transmission period of one slot has reached the maximum transmission power (Pmax) depends on a transmission timing difference between the DPDCH and the HS-DPCCH. This affects the way of allocating radio resource control, communication capacity control and the like performed by the base station control device, and keeps the operation of the mobile station defined by the standards from being uniquely defined. This prevents the operation of the communication system from being optimized.

Non-patent Document 7: 3rd Generation Partnership Project; Technical Specification Group Radio Access Network; Requirements for support of radio resource management (FDD) (Release 5) 3GPP TS 25.133 V5.12.0 (2004-09)

According to the technical specification TS 25.101 (Non-Patent Document 6: Chapter 6.2.2 UE maximum output power with HS-DPCCH,), different requirements about maximum transmission power are applied to when the HS-DPCCH is transmitted partially or the entire time, or when the HS-DPCCH is not transmitted, during a slot time of the DPDCH/DPCCH. Namely, the maximum transmission power of a mobile station is limited in the DPDCH/DPCCH slot the HS-DPCCH covers. This increases the possibility that the transmission power of the mobile station is evaluated (determined) to have reached the maximum transmission power value in that slot, under greater influence of a transmission timing difference between the DPDCH and the
HS-DPCCH.

As has been discussed, the current transmission power requirements are not intended for a plurality of channels transmitted in uplink with different transmission timing references. It is an object of the present invention to provide a mobile station, a fixed station, a communication method, and a communication system for solving various kinds of problems resulting from different transmission timing references of a plurality of channels such as the DPDCH and the HS-DPCCH transmitted in uplink.

### Means for Solving the Problems

A method of controlling transmission power according to the present invention includes:
a transmission power measurement process of measuring transmission power during a transmission power measurement period, the period being set with a slot of an uplink dedicated physical channel as a reference, the channel transmitting user data with a time difference designated with reference to a common pilot channel transmitted from a base station by a fixed station side;
a transmission control process of evaluating and determining a usable data transmission speed for the uplink dedicated physical channel based on a transmission power measurement result measured in the transmission power measurement process, and performing a modulation process and transmission power control in accordance with the determined data transmission speed; and
a transmission power measurement control process of changing the transmission power measurement period in accordance with a channel set in uplink other than the uplink dedicated physical channel from a mobile station to the fixed station side.

A mobile station according to the present invention includes:
a transmission power measurement section for measuring transmission power during a transmission power measurement period, the period being set with a slot of an uplink dedicated physical channel as a reference, the channel transmitting user data with a time difference designated with reference to a common pilot channel transmitted from a base station by a fixed station side;
a transmission control section for evaluating and determining a usable data transmission speed for the uplink dedicated physical channel based on a transmission power measurement result measured by the transmission power measurement section, and performing a modulation process and transmission power control in accordance with the determined data transmission speed; and
a transmission power measurement control section for outputting the transmission power measurement period to the transmission power measurement section, the period having been changed in accordance with a channel set in uplink other than the uplink dedicated physical channel from a mobile station to the fixed station side.

A fixed station according to the present invention includes:
a radio resource control section for generating setting information, the setting information including at least amplitude coefficients of an uplink dedicated physical channel transmitted by a mobile station and an uplink control channel for transmitting control data including a reception result of a high-speed packet data channel set in downlink to the mobile station, and transmission timing at which the mobile station transmits the uplink dedicated physical channel; and
a transmission section for transmitting the setting information generated by the radio resource control section to the mobile station, wherein the radio resource control section changes a transmission power measurement period in accordance with a channel set other than the uplink dedicated physical channel, the period being a time period set with a slot of the uplink dedicated physical channel as a reference and for measuring transmission power transmitted in uplink by the mobile station.

A communication system according to the present invention includes:
a mobile station, the mobile station including a transmission power measurement section for measuring transmission power during a transmission power measurement period, the period being set with a slot of an uplink dedicated physical channel as a reference, the channel transmitting user data with a prescribed time difference in response to a common pilot channel, a transmission control section for evaluating and determining a usable data transmission speed for the uplink dedicated physical channel based on a transmission power measurement result measured by the transmission power measurement section, and performing a modulation process and transmission power control in accordance with the determined data transmission speed, and a transmission power measurement control section for outputting the transmission power measurement period to the transmission power measurement section, the period having been changed in accordance with a channel set in uplink other than the uplink dedicated physical channel; and
a fixed station, the fixed station including a radio resource control section for generating setting information, the information including amplitude coefficients of the uplink dedicated physical channel transmitted by the mobile station and an uplink control channel for transmitting control data including a reception result of a high-speed packet data channel set in downlink to the mobile station, transmission timing at which the mobile station transmits the uplink dedicated physical channel, and the transmission power measurement period having been changed in accordance with the channel set other than the uplink dedicated physical channel, and a transmission section for transmitting the setting information generated by the radio resource control section to the mobile station.

### Advantageous Effect of the Invention

The method of controlling transmission power according to the present invention includes:
a transmission power measurement process of measuring transmission power during a transmission power measurement period, the period being set with a slot of an uplink dedicated physical channel as a reference, the channel transmitting user data with a time difference designated with reference to a common pilot channel transmitted from a base station by a fixed station side;
a transmission control process of evaluating and determining a usable data transmission speed for the uplink dedicated physical channel based on a transmission power measurement result measured in the transmission power measurement process, and performing a modulation process and transmission power control in accordance with the determined data transmission speed; and
a transmission power measurement control process of changing the transmission power measurement period in accordance with a channel set in uplink other than the uplink dedicated physical channel from a mobile station to the fixed station side. Therefore, the similar transmission power measurement and transmission power control in a Release 1999-compliant communication system can also be applied to a Release 5-compliant communication system using the HSDPA.

The mobile station according to the present invention includes:
a transmission power measurement section for measuring transmission power during a transmission power measurement period, the period being set with a slot of an uplink dedicated physical channel as a reference, the channel transmitting user data with a time difference designated with reference to a common pilot channel transmitted from a base station by a fixed station side;
a transmission control section for evaluating and determining a usable data transmission speed for the uplink dedicated physical channel based on a transmission power measurement result measured by the transmission power measurement section, and performing a modulation process and transmission power control in accordance with the determined data transmission speed; and
a transmission power measurement control section for outputting the transmission power measurement period to the transmission power measurement section, the period having been changed in accordance with a channel set in uplink other than the uplink dedicated physical channel from a mobile station to the fixed station side. Therefore, the similar transmission power measurement and transmission power control in a Release 1999-compliant communication system can also be applied to a Release 5-compliant communication system using the HSDPA.

The fixed station according to the present invention includes:
a radio resource control section for generating setting information, the information including at least amplitude coefficients of an uplink dedicated physical channel transmitted by a mobile station and an uplink control channel for transmitting control data including a reception result of a high-speed packet data channel set in downlink to the mobile station, and transmission timing at which the mobile station transmits the uplink dedicated physical channel; and
a transmission section for transmitting the setting information generated by the radio resource control section to the mobile station, wherein the radio resource control section changes a transmission power measurement period in accordance with a channel set other than the uplink dedicated physical channel, the period being a time period set with a slot of the uplink dedicated physical channel as a reference and for measuring transmission power transmitted in uplink by the mobile station. Therefore, the similar transmission power measurement and transmission power control in a Release 1999-compliant communication system can also be applied to a Release 5-compliant communication system using the HSDPA.

The communication system according to the present invention includes:
a mobile station, the mobile station including a transmission power measurement section for measuring transmission power during a transmission power measurement period, the period being set with a slot of an uplink dedicated physical channel as a reference, the channel transmitting user data with a prescribed time difference in response to a common pilot channel, a transmission control section for evaluating and determining a usable data transmission speed for the uplink dedicated physical channel based on a transmission power measurement result measured by the transmission power measurement section, and performing a modulation process and transmission power control in accordance with the determined data transmission speed, and a transmission power measurement control section for outputting the transmission power measurement period to the transmission power measurement section, the period having been changed in accordance with a channel set in uplink other than the uplink dedicated physical channel; and
a fixed station, the fixed station including a radio resource control section for generating setting information, the information including amplitude coefficients of the uplink dedicated physical channel transmitted by the mobile station and an uplink control channel for transmitting control data including a reception result of a high-speed packet data channel set in downlink to the mobile station, transmission timing at which the mobile station transmits the uplink dedicated physical channel, and the transmission power measurement period having been changed in accordance with the channel set other than the uplink dedicated physical channel, and a transmission section for transmitting the setting information generated by the radio resource control section to the mobile station. Therefore, the similar transmission power measurement and transmission power control in a Release 1999-compliant communication system can also be applied to a Release 5-compliant communication system using the HSDPA.

### Brief Description of Drawings

- Fig. 1: illustrates a mobile communication system of the W-CDMA system.
- Fig. 2: is a block diagram of the structure of a mobile station according to a first preferred embodiment of the present invention.
- Fig. 3: illustrates changes in transmission power of DPDCH, HS-DPCCH, and DPDCH and HS-DPCCH.
- Fig. 4: is a flowchart of a process of controlling a transmission power measurement period performed by the mobile station according to the first preferred embodiment of the present invention.
- Fig. 5: is a block diagram of the structure of a fixed station according to the first preferred embodiment of the present invention.
- Fig. 6: illustrates a series of exchanges of signals when the fixed station causes the mobile station to set the transmission power measurement period.
- Fig. 7: illustrates changes over time in DPDCH power, HS-DPCCH power, and total transmission power of the DPDCH and the HS-DPCCH.
- Fig. 8: is a flowchart of a process of controlling the transmission power measurement period performed by the mobile station according to a second preferred embodiment of the present invention.
- Fig. 9: illustrates changes over time in DPDCH power, HS-DPCCH power, and total transmission power of the DPDCH and the HS-DPCCH.
- Fig. 10: is a flowchart of a process of controlling the transmission power measurement period performed by the mobile station according to a third preferred embodiment of the present invention.
- Fig. 11: illustrates changes over time in DPDCH power, HS-DPCCH power, and total transmission power of the DPDCH and the HS-DPCCH.
- Fig. 12: is a flowchart of a process of controlling the transmission power measurement period performed by the fixed station according to a fourth preferred embodiment of the present invention.
- Fig. 13: is a flowchart of a process of controlling the transmission power measurement period performed by the fixed station according to a fifth preferred embodiment of the present invention.
- Fig. 14: illustrates a communication system according to a sixth preferred embodiment of the present invention.

### Explanation of Referenced Numerals

- 101 =: mobile communication system
- 102 =: mobile station
- 103 =: base station
- 104 =: base station control device
- 105 =: common pilot channel
- 106 =: uplink DPCCH
- 107 =: downlink DPCCH
- 108 =: uplink DPDCH
- 109 =: downlink DPDCH
- 110 =: uplink HS-DPCCH
- 111 =: downlink HS-PDSCH
- 112 =: external network
- 113 =: E-DPDCH/E-DPCCH
- 114 =: E-HIGH
- 201 =: radio resource control section
- 202 =: transmission setting evaluation section
- 203 =: transmission speed control section
- 204 =: modulation section
- 205 =: transmission section
- 206 =: antenna
- 207 =: power measurement section
- 208 =: measurement control section
- 209 =: reception section
- 210 =: demodulation section
- 301 =: radio resource control section
- 302 =: transmission setting evaluation section,
- 303 =: transmission speed control section
- 304 =: modulation section
- 305 =: transmission section
- 306 =: antenna
- 309 =: reception section
- 310 =: demodulation section.

### Best Modes for Carrying Out the Invention

### First Preferred Embodiment

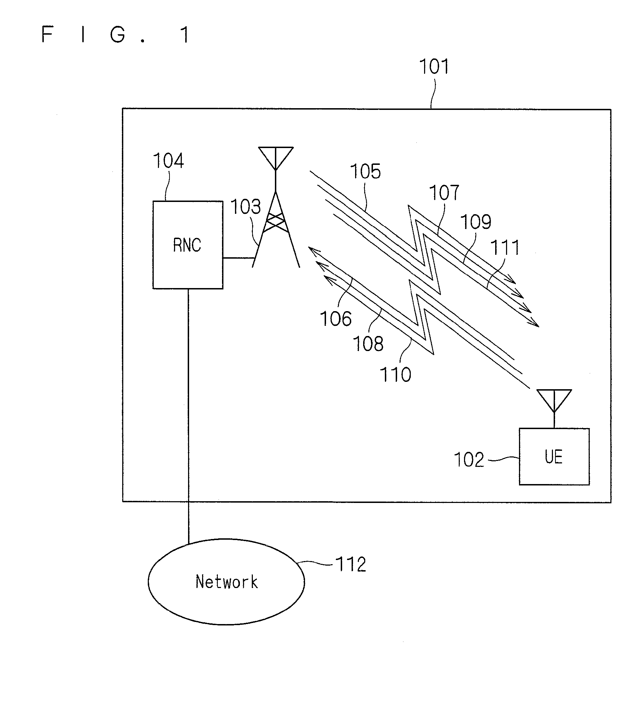

Fig. 1 illustrates a mobile communication system of the W-CDMA system. In Fig. 1, a mobile communication system 101 comprises a mobile station (UE) 102, a base station (Node B) 103, and a base station control device (RNC) 104. The mobile station 102 and the base station 103 conduct radio communication, and the base station 103 and the base station control device 104 conduct wired communication. The mobile station 102 and the base station 103 use a common pilot channel (CPICH) 105, an uplink DPCCH 106, a downlink DPCCH 107, an uplink DPDCH 108, a downlink DPDCH 109, an uplink HS-DPCCH 110, and a downlink HS-PDSCH 111. The HS-PDSCH 111 is transmitted with a HS-SCCH as a pair. The base station control device 104 mediates communication between the mobile station 102 and an external network 112. The base station 103 and the base station control device 104 are termed a UTRAN (Universal Terrestrial Radio Access Network) by the 3GPP standards, but are referred to as a fixed station below.

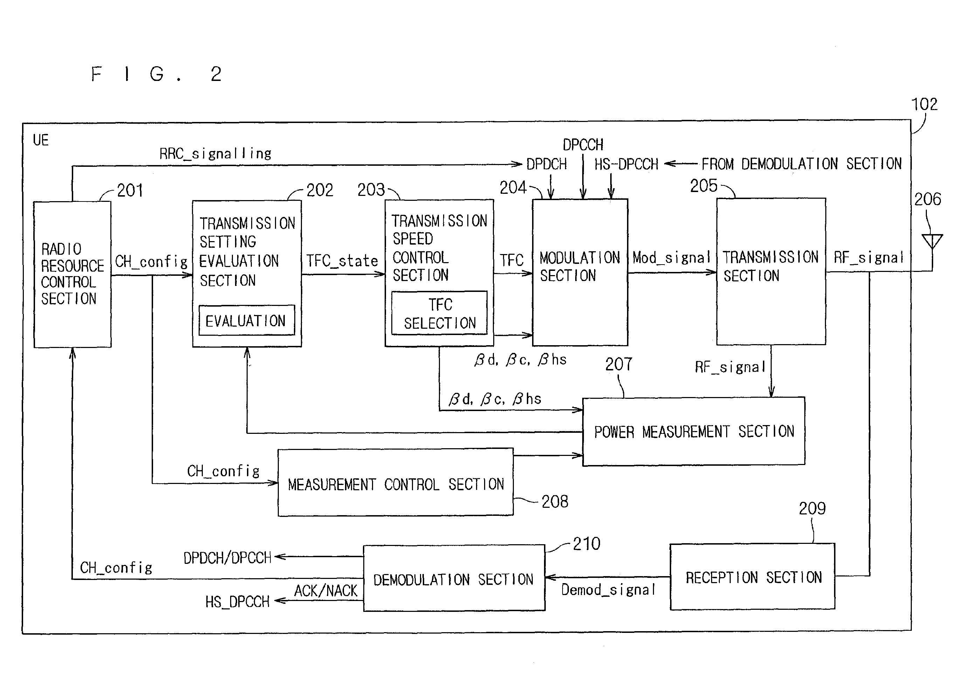

Fig. 2 is a block diagram of the structure of the mobile station according to a first preferred embodiment of the present invention. In Fig. 2, a radio resource control section 201 controls various kinds of initial settings such as combination of channels and transmission speed required for transmission and reception of the mobile station 102, and outputs setting information (CH_config) to a transmission setting evaluation section 202. The setting information (CH_config) includes gain factor (β) settings and transmission timing settings of the respective channels. The setting information (CH_config) is transmitted from the base station control device 104 to the mobile station 102 through the base station 103 in advance of communication or during communication, to be input to the radio resource control section 201 through a reception section 209 and a demodulation section 210 that are described later. The radio resource control section 201 also sends radio resource management information (RRC_signalling) exchanged with the fixed station side (the base station control device 104/the base station 103) described later as data through the DPDCH. The transmission setting evaluation section 202 has an evaluation function therein.

The transmission setting evaluation section 202 evaluates the actual transmission condition with an evaluation block based on the setting information (CH_config) from the radio resource control section 201 and transmission power estimate information (Estimated transmit power) from a power measurement section 207 described later, and controls the allowance or prohibition of the use of TFC. The transmission setting evaluation section 202 also outputs state information (TFC_state) of each TFC based on the evaluation results to a transmission speed control section 203. The transmission speed control section 203 has a transmission speed determination (TFC selection) function of selecting one TFC for the actual transmission. The transmission speed control section 203 outputs TFC information and amplitude (βd, βc, βhs) information of each channel to be used for the actual transmission to a modulation section 204 based on the state information (TFC_state) from the transmission setting evaluation section 202. The βd indicates a gain factor to be used for the DPDCH, βc for the DPCCH, and βhs for the HS-DPCCH. The radio resource control section 201, the transmission setting evaluation section 202, and the transmission speed control section 203 form transmission controlling means.

The modulation section 204 multiplexes the uplink DPDCH, DPCCH, and HS-DPCCH to be actually transmitted by known techniques such as IQ multiplexing based on the input TFC information and the channel amplitude information (βd, βc, βhs). The modulation section 204 also performs spreading/modulating processing by known techniques, to output a modulated signal (Mod_signal). The modulation section 204 forms multiplexing modulating means. A transmission section 205 amplifies the input modulated signal (Mod_signal) to required power by known techniques, and outputs a radio signal (RF_signal). The radio signal (RF_signal) is transmitted by radio from an antenna 206, while being output to the power measurement section 207. The transmission section 205 and the antenna 206 form transmitting means.

The power measurement section 207 measures (or estimates) period-average control transmission power from the received radio signal (RF_signal) based on timing information (Measurement period) from a measurement control section 208 and the gain factors (βd, βc, βhs) from the transmission speed control section 203, to output the transmission power estimate information (Estimated transmit power).
The measurement control section 208 outputs, based on the setting information (CH_config), the timing control information (Measurement period) for controlling timing of the power measurement (estimate) at the power measurement section 207 to the power measurement section 207. Information necessary for the timing settings may be stored in the measurement control section 208 in advance, or may be notified as part of the setting information (CH_config). In this embodiment, the information is stored in the measurement control section 208 in advance, and changed in accordance with the setting information (CH_config). The power measurement section 207 and the measurement control section 208 form transmission power estimating means.

The reception section 209 receives a radio signal (RF_signal) in downlink received by the antenna 206, and outputs a demodulated signal (Demod_signal) by known techniques. The demodulation section 210 inputs the demodulated signal (Demod_signal) and separates various downlink channels by known techniques, to output a data signal and setting information (CH_config) from the DPDCH and a control signal from the DPCCH, respectively.
The demodulation section 210 also outputs a reception determination result (ACK/NACK) in response to packet data transmitted through the HS-PDSCH from the base station 103. Of the signals separated at the demodulation section 210, the setting information (CH_config) is output to the radio resource control section 201. The packet reception determination result (ACK/NACK) is transmitted as data of the HS-DPCCH through the modulation section 204, the transmission section 205, and the antenna 206, to the base station 103.

Fig. 3 illustrates changes in DPDCH power, HS-DPCCH power, and total transmission power of the DPDCH and the HS-DPCCH. Fig. 3(a) shows changes in transmission power of the DPDCH and the HS-DPCCH, respectively, and Fig. 3(b) shows a change in the total transmission power of the DPDCH and the HS-DPCCH. In the graphs shown in Fig. 3, the vertical axis represents power, the horizontal axis represents time, and the symbols "UPPER/TYP/LOWER" represent the maximum power value/the typical power value/the minimum power value of the time mask defined in the technical specification TS 25.101. The symbol "MEASUREMENT PERIOD" represents a transmission power measurement period of conventional standards in (a) and a shortened transmission power measurement period in (b).
Fig. 3(a) shows a DPDCH slot and a HS-DPCCH slot, with a timing difference "a" between the HS-DPCCH slot period and the DPDCH slot period, namely, a time difference between the completion of transmitting the HS-DPCCH slot and the start of transmitting the DPDCH slot. The bidirectional arrows in Fig. 3 indicate transition time (25 microseconds). Typical power transition is blackened out. In Fig. 3, the slot transmission period of the HS-DPCCH and the slot transmission period of the DPDCH are kept apart with 25 microseconds (i.e. "a" = 25 microseconds). Further, the transmission states (ON/OFF or High/Low) of both channels almost alternate.

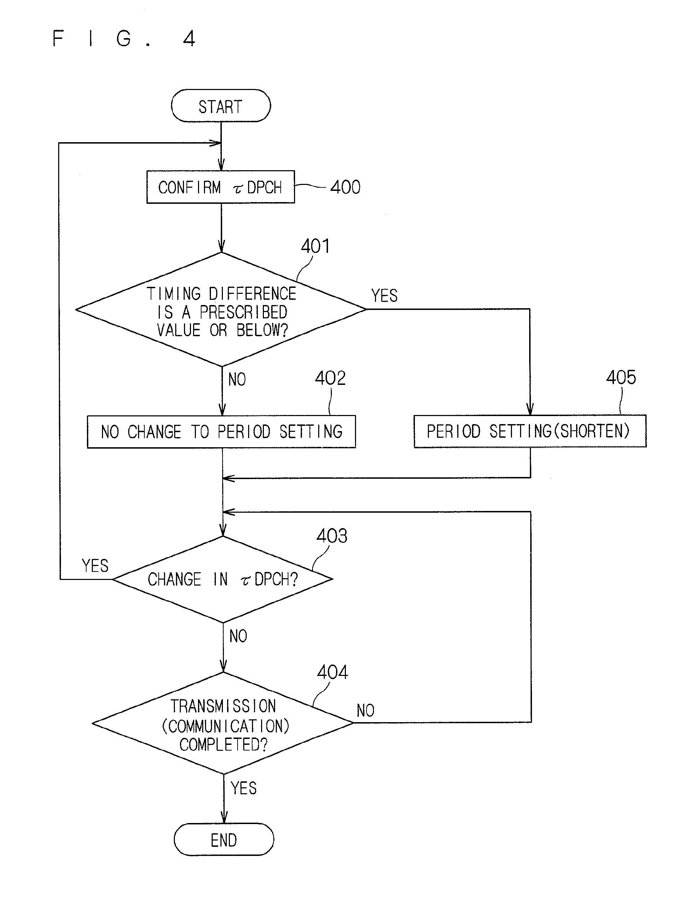

Fig. 4 is a flowchart of a process of controlling a transmission power measurement period performed by the mobile station according to the first preferred embodiment of the present invention. The process of controlling a transmission power measurement period in the communication system 101 will be explained with reference to Fig. 4. In advance of the start of communication, the initial settings of various radio resources such as channel settings, communication speed settings, and timing settings to be used for the communication are determined between the fixed station including the base station 103 and the base station control device 104 and the mobile station 102, based on a communication request from the mobile station 102 or the external network 112. The initial value of τDPCH, a timing offset for the DPDCH, is also determined.
The set offset τDPCH is notified to the mobile station 102, which sets a transmission timing of the uplink DPDCH. The mobile station 102 stores the notified various setting information in the radio resource control section 201. The radio resource control section 201 outputs the setting information (CH_config) to the transmission setting evaluation section 202 and the measurement control section 208 in order to control operation settings of the respective sections of the mobile station 102. The measurement control section 208 places the transmission power measurement period in the initial state. Since the CPICH is used to synchronize the communicating cell and the mobile station 102, the mobile station understands the timing of the CPICH at the beginning of the initial settings.

Data of the DPDCH and the HS-DPCCH are multiplexed and modulated together with the data and control information of the DPCCH at the modulation section 204 based on the TFC and the gain factors, and transmitted to the base station 103 through the antenna 206. The process of transmitting channels is performed in parallel with the process of controlling a transmission power measurement period shown in Fig. 4. The power measurement section 207 of the mobile station estimates (measures) transmission power utilizing the channel amplitude coefficients (gain factors β) during the transmission power measurement period in the initial state, and outputs the estimated power to the transmission setting evaluation section 202.
The power measurement section 207 also estimates (measures) transmission power utilizing the respective channel amplitude coefficients (gain factors βd, βc, βhs) based on the input timing control information (Measurement period), and outputs transmission power information (Estimated UE transmit power) to the transmission setting evaluation section 202. The transmission setting evaluation section 202 evaluates the allowance or prohibition of the use of TFC for the DPDCH based on the transmission power information (Estimated UE transmit power) from the power measurement section 207 and the setting information (CH_config). The transmission speed control section 203 controls the transmission speed, namely, the transmission power, based on the evaluation result on the use of TFC.

Turning to Fig. 4, the measurement control section 208 of the mobile station 102 confirms the time offset value (τDPCH) for the transmission timing of the DPDCH based on the input setting information (CH_config) (step 400). Next, it is determined whether the transmission timing difference "a" between the uplink DPDCH slot and the HS-DPCCH slot is a prescribed value or below. The prescribed value may be an initially set value at the mobile station 102, or may be determined through communication capacity control performed by the base station control device 104 and notified to the mobile station 102.
When the transmission timing difference between the DPDCH and the HS-DPCCH is higher than the prescribed value ("NO"), no change is made to the transmission power measurement period (step 402), and data is transmitted using the DPDCH and the HS-DPCCH. In step 403, the measurement control section 208 monitors a change and notification of the τDPCH value at the radio resource control section 201 during the communication. When τDPCH has been changed and notified ("YES"), step 400 is executed. When τDPCH has not been changed ("NO"), step 404 is executed. In step 404, the radio resource control section 201 monitors the completion of transmission (communication) from the mobile station 102.
When the transmission (communication) has completed ("YES"), the communication is completed, and when the transmission has not completed ("NO"), processing returns to step 403. When the transmission timing difference "a'' between the DPDCH and the HS-DPCCH is the prescribed value or below ("YES") in step 401, the measurement control section 208 shortens (changes) the transmission power measurement (estimate) period to not include the transition times of both channels. The measurement control section 208 outputs the timing control information (Measurement period) to the power measurement section 207 during the shortened transmission power measurement period (step 405).

Namely in this embodiment, the setting of the transmission power measurement (estimate) period is changed depending on the size of the difference "a" between the transmission timing reference of the DPDCH/DPCCH and the transmission timing reference of the HS-DPCCH, to exclude transition times determined by the two timings. Further, a change in the total transmission power is defined by a difference between the average power of a reference slot and the average power of a target slot, without considering power during all transition times (transition time of each channel is 25 µs before and after the transmission slot of each channel). The state where the DPDCH or the HS-DPCCH is transmitted is called a Cell_DCH state by the 3GPP, and a period excluding transition times of all channels in one slot is used as the measurement (estimate) period in this state.

As described above, when a transmission timing difference is small between a plurality of channels such as the DPDCH and the HS-DPCCH having different transmission timing references (timing of slot transmission), the mobile station according to the present invention measures transmission power after shortening the transmission power measurement (estimate) period to exclude transition regions of the plurality of channels. Accordingly, when transmitting the plurality of channels having different transmission timing references, the average power and peak power over the transmission power measurement period become equal to each other, with constant power transition over the transmission power measurement period.
In other words, even with the setting of a plurality of channels having different transmission timings, the transmission timing difference between the channels does not affect the transmission power measurement, thereby improving the accuracy of the transmission power measurement, and transmission power control having transmission speed and transmission power determined depending on the transmission power measurement. Moreover, the similar transmission power measurement and transmission power control in a Release 1999-compliant communication system can also be applied to a Release 5-compliant communication system using the HSDPA.

More specifically, a mobile station in a communication system of Release 5 is capable of performing transmission power control one time per slot just like in a communication system of Release 1999, thus preventing the structure and process of the mobile station from being complicated. Further, when a transmission timing difference is small between the DPDCH and the HS-DPCCH, the accuracy of transmission power control is not significantly reduced because power contributing to spike-like power transition is small, and the quality of communication is not significantly affected because unnecessary radiation power generated by spike portions is small. Moreover, with one end of the timing defining the transmission power measurement period remaining the period timing of the DPDCH, the transmission power measurement only requires simple processing.

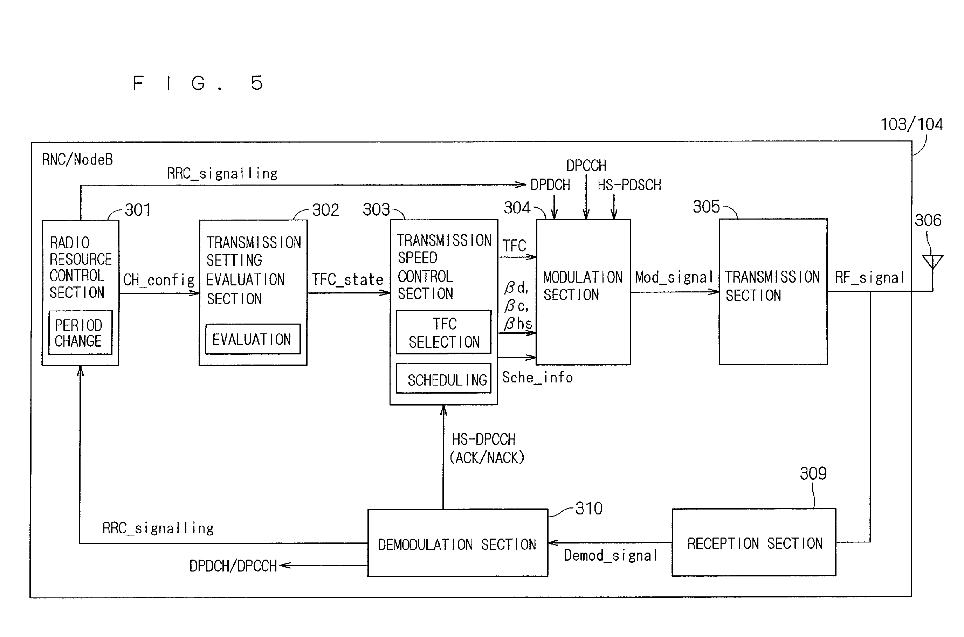

Although the mobile station 102 itself controls a transmission power measurement period by setting and changing the period based on the timing offset (τDPCH) setting of the DPDCH in the above description, the fixed station side may designate a transmission power measurement period to the mobile station, causing the mobile station 102 to set the transmission power measurement period in accordance with the designation. Fig. 5 is a block diagram of the structure of the fixed station according to the first preferred embodiment of the present invention. The fixed station shown in Fig. 5 is illustrated as a functional block diagram of the base station 103 and the base station control device 104. Each block represents a functional unit. The fixed station shown in Fig. 5 may be provided in one of the base station 103 and the base station control device 104 depending on an implemented mode of the two devices, or as an independent device.

In Fig. 5, a radio resource control section 301 controls settings such as combination of channels and transmission speed required for transmission and reception with the mobile station 102. The radio resource control section 301 includes a transmission-power-measurement-period changing block, and has the function of changing the setting of a transmission power measurement (estimate) period of the mobile station 102. Note that the process illustrated in Fig. 4 is still performed when the fixed station side determines whether to change the transmission power measurement period. The radio resource control section 301 outputs setting information (CH_config).
The setting information (CH_config) includes information about amplitude coefficient settings of the respective channels, transmission timing settings, transmission power measurement (estimate) period settings of the mobile station, and so forth. The setting information (CH_config) is output from the base station control device 104 to the mobile station 102 in advance of communication or during communication. The radio resource control section 301 also outputs radio resource management information (RRC_signalling) about the initial settings and the like for transmission and reception with the mobile station 102.
The radio resource management information (RRC_signalling) includes period setting control information (Timing info) described later that is output from the radio resource control section 301. A demodulation section 310 demodulates the similar radio resource management information (RRC_signalling) from the mobile station 102. A transmission setting evaluation section 302 evaluates the allowance or prohibition of the use of TFC for the downlink DPDCH based on the setting information (CH_config) from the radio resource control section 301, and outputs state information (TFC_state) about the use of TFC for the downlink DPDCH.

A transmission speed control section 303 has a transmission speed determination (TFC selection) function of selecting a TFC for the actual DPDCH transmission, and also has a scheduling function of controlling downlink packet transmission in the HSDPA. The transmission speed control section 303 outputs TFC information (TFC) and gain factors (βd, βc, βhs) to be used for the DPDCH transmission based on the state information (TFC_state) from the transmission setting evaluation section 302. The βd indicates a gain factor to be used for the DPDCH, βc for the DPCCH, and βhs for the HS-DPCCH. The transmission speed control section 303 also performs scheduling processing using the packet reception determination result (ACK/NACK) transmitted through the HS-DPCCH from the mobile station 102, to output scheduling result information (Sche_info) to a modulation section 304. The radio resource control section 301, the transmission setting evaluation section 302, and the transmission speed control section 303 form transmission controlling means.

The modulation section 304 multiplexes the downlink DPDCH, DPCCH, and HS-PDSCH to be actually transmitted by known techniques such as IQ multiplexing based on the TFC information (TFC) on the DPDCH, the gain factors (βd, βc, βhs) of the respective channels, and the scheduling result information (Sche_info) from the transmission speed control section 303. The modulation section 304 also performs spreading/modulating processing by known techniques, to output a modulated signal (Mod_signal). A transmission section 305 amplifies the input modulated signal (Mod_signal) to required power by known techniques, and outputs a radio signal (RF_signal). The radio signal (RF_signal) is transmitted by radio in downlink (DPDCH 107, DPDCH 109, HS-PDSCH 111) from an antenna 306.

A reception section 309 outputs the radio signal (RF_signal) in uplink received by the antenna 306 as a demodulated signal (Demod_signal) to the demodulation section 310. The demodulation section 310 separates various uplink channels (DPCCH, DPDCH, HS-DPCCH) based on the demodulated signal (Demod_signal), to obtain data from the DPDCH, a control signal from the DPCCH, and the packet reception determination result (ACK/NACK) from the HS-DPCCH, respectively. The radio resource management information (RRC_signalling) transmitted from the mobile station 102 is separated from the DPDCH and output to the radio resource control section 301. The demodulation section 310 also outputs the packet reception determination result (ACK/NACK) to the transmission speed control section 303.

Fig. 6 illustrates a series of exchanges of the radio resource management information (RRC_signalling) when the fixed station (the base station control device and the base station) causes the mobile station to set a transmission power measurement period. The fixed station notifies the mobile station of the period setting control information (Timing info) as control information for causing the mobile station to set/change a transmission power measurement period. According to the W-CDMA standards, control information between a base station control device and a base station is communicated under a protocol called NBAP (Node B Application Part). The control information is exchanged through a downlink DPDCH as described in the first preferred embodiment, but may be exchanged through another data transmitting channel such as a FACH and a S-CCPCH, which are common channels defined in Release 1999.

Turning to Fig. 6, the radio resource control section 301 of the fixed station (the base station control device 104/the base station 103) transmits the various kinds of setting information (CH_config) including the determined or changed period setting control information (Timing info) through the downlink DPDCH as the radio resource management information (RRC_signalling). The data transmitted through the downlink DPDCH is multiplexed with other channels at the modulation section 304 in accordance with a TFC determined at the transmission speed control section 303, and output as the modulated signal (Mod_signal) to the transmission section 305.
The transmission section 305 amplifies the modulated signal including the period setting control information (Timing info) to required power, and transmits it as the radio signal (RF_signal) to the mobile station 102 (step 601). Next, the radio signal (RF_signal) received by the mobile station is demodulated at the reception section 209 and the demodulation section 210, and then separated into the respective channels. At this time, the demodulation section 210 separates the setting information (CH_config) including the period setting control information (Timing info) for setting a transmission power measurement period, and outputs the separated setting information (CH_config) to the radio resource control section 201.
The radio resource control section 201 transmits reception-completion information (Rx ACK) as the radio resource management information (RRC_signalling) through the uplink DPDCH, to notify the fixed station of the receipt of the period setting control information (Timing info) from the fixed station. The reception-completion information (Rx ACK) is transmitted by radio to the fixed station side as the uplink DPDCH 108. Upon receipt of the reception-completion information (Rx ACK), the fixed station notifies the radio resource control section 301 of the receipt (step 602).

In the mobile station, the radio resource control section 201 outputs the setting information (CH_config) to the measurement control section 208. The measurement control section 208 extracts the period setting control information (Timing info) from the setting information (CH_config), and outputs it as the timing control information (Measurement period) to the power measurement section 207. The power measurement section 207 changes the transmission power measurement period. The radio resource control section 201 confirms that the measurement control section 208 has changed the transmission power measurement period (step 603). Then, the radio resource control section 201 confirms the completion of change in transmission power measurement period, and transmits completion information (Set complete) through the uplink DPDCH. The completion information (Set complete) is transmitted to the fixed station side through the uplink DPDCH 108 (step 604).

As described above, the period setting is changed (controlled) on the fixed station side. This increases control flexibility and simplifies the structure of the mobile station.

### Second Preferred Embodiment

The mobile station and the fixed station according to the first preferred embodiment change a transmission power measurement period based on a transmission timing difference between the DPDCH and the HS-DPCCH. A mobile station according to a second preferred embodiment described below changes a transmission power measurement period depending on the presence or absence of the HS-DPCCH.

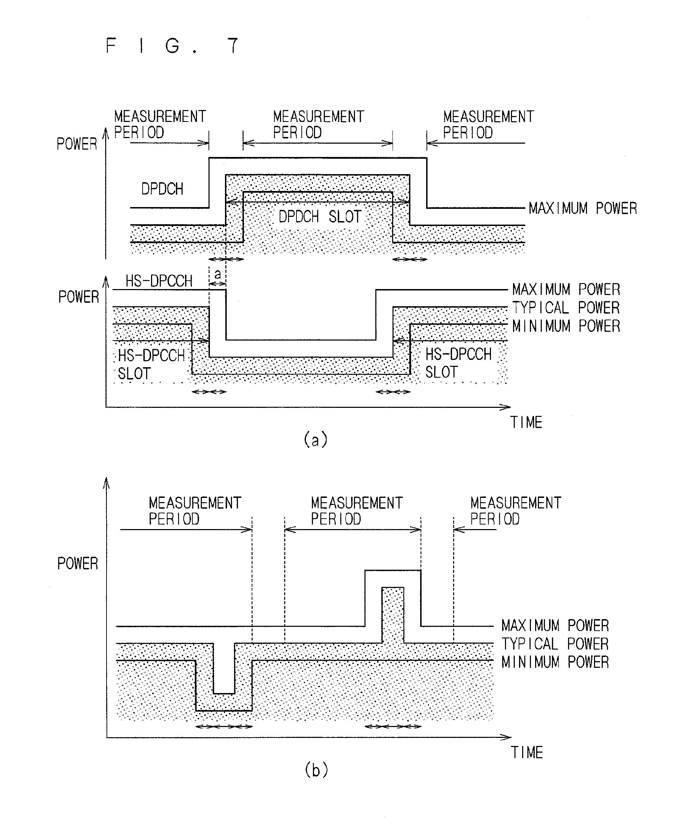

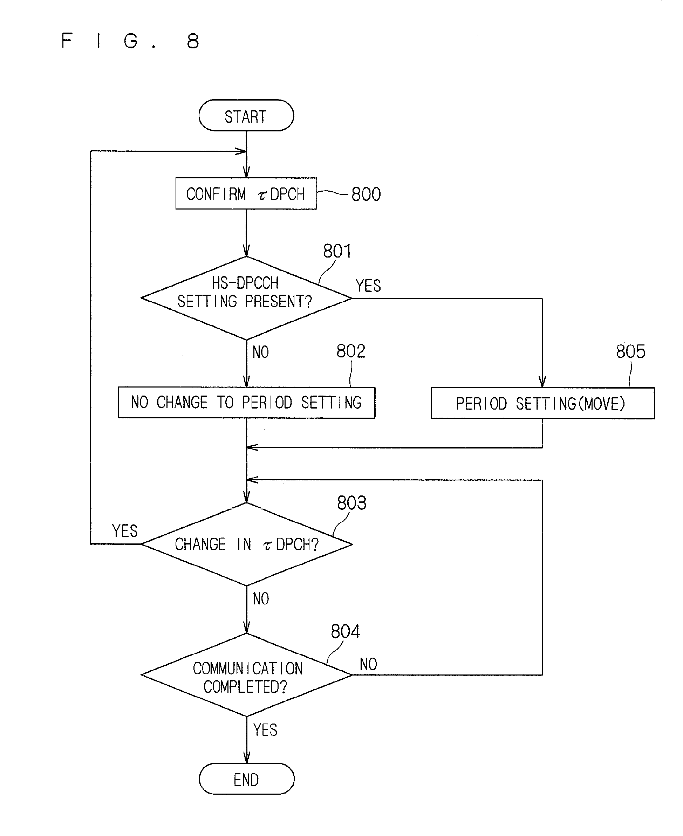

Fig. 7 illustrates changes over time in DPDCH power, HS-DPCCH power, and total transmission power of the DPDCH and the HS-DPCCH. Fig. 7 is to be understood the same way as Fig. 3 is, and a description of the way is not replicated below. As shown in Fig. 7, the transmission power measurement period (MEASUREMENT PERIOD) is moved to include transition time of each channel (see Fig. (b)). Note that the length of the transmission power measurement period is not changed. Fig. 8 is a flowchart of a process of controlling a transmission power measurement period performed by the mobile station according to the second preferred embodiment of the present invention.
The process of changing a transmission power measurement period according to the first preferred embodiment is performed with the timing difference "a" between the DPDCH and the HS-DPCCH as a reference for changing the period. The process shown in Fig. 8 described below is performed with the presence or absence of HS-DPCCH setting as a reference for changing the period. The process of Fig. 8 is identical or equivalent to the process of Fig. 4 except step 801 and step 805, and descriptions of the identical or equivalent steps are not replicated below.

Turning to Fig. 8, it is determined whether the HS-DPCCH is set in uplink in step 801. As the HS-DPCCH is set with the HS-PDSCH in downlink as a pair, the determination may be made based on whether HSDPA settings are made. When the HS-DPCCH is not set ("NO" in step 801), step 802 and the subsequent steps are executed. When the HS-DPCCH is set ("YES" in step 801), step 805 is executed. In step 805, the measurement control section 208 moves (changes) the transmission power measurement period to include transition times of the DPDCH and the HS-DPCCH having different timings.
The measurement control section 208 then outputs the timing control information (Measurement period) to notify the power measurement section 207 of the moved (changed) transmission power measurement period. Then, step 803 and the subsequent steps are executed. The power measurement section 207 measures transmission power over the transmission power measurement period, and obtains an average power value over the period, for example.

Namely in this embodiment, the setting of a transmission power measurement (estimate) period is changed (moved) depending on the presence or absence of HS-DPCCH setting. When the HS-DPCCH is set, the period is changed to include transition times determined by the timings of both channels. Further, a change in the total transmission power is defined by a difference between the average power of a reference slot and the average power of a target slot, with consideration given to transition time of each channel (which is 25 µs before and after the transmission slot of each channel). The timing interval of the transmission power measurement (estimate) period is the same as the timing interval of the DPDCH (DPCH) slot, and includes transition times of both channels when the HS-DPCCH is set.

As described above, the transmission power measurement period is changed depending on the presence or absence of transmission setting of the HS-DPCCH having a different transmission timing from the uplink channels (DPDCH, DPCCCH) of Release 1999. This allows power measurement considering power variations, thereby improving the accuracy of transmission power control and maximum transmission power measurement.

Although the mobile station determines whether to change the transmission power measurement period in the above description, the fixed station side may determine whether to change the period and notify the mobile station of the change.

### Third Preferred Embodiment

The mobile station according to the second preferred embodiment uses the presence or absence of the HS-DPCCH as a reference for changing the transmission power measurement period, and moves (changes) the period to include transition times of the DPDCH and the HS-DPCCH having different timings when the HS-DPCCH is set. A mobile station according to a third preferred embodiment described below extends or moves a transmission power measurement period to include a peak region of the total transmission power of the DPDCH and the HS-DPCCH.

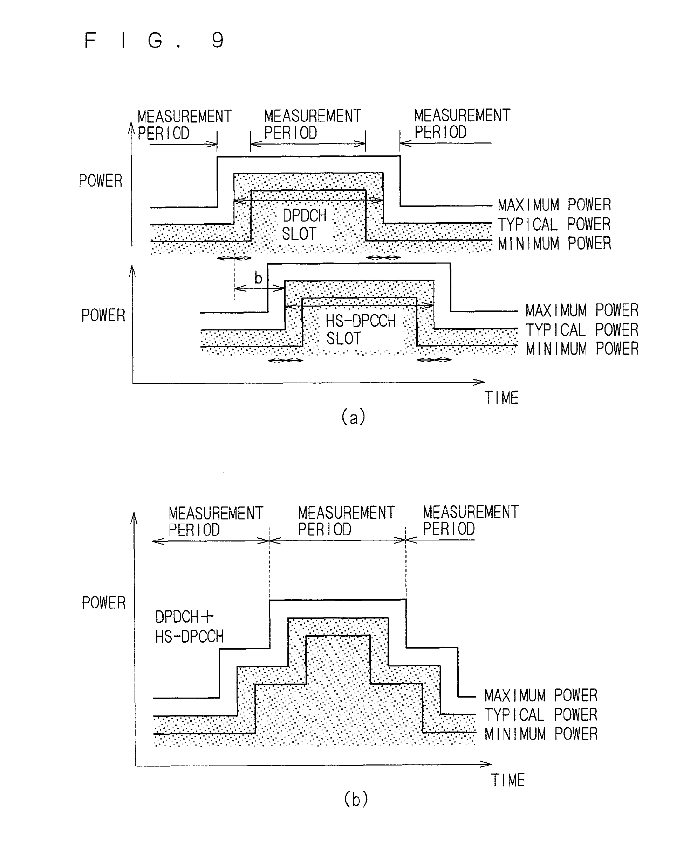

Fig. 9 illustrates changes in DPDCH power, HS-DPCCH power, and total transmission power of the DPDCH and the HS-DPCCH. Fig. 9 is to be understood the same way as Fig. 3 is, and a description of the way is not replicated below. As shown in Fig. 9, the transmission power measurement period (MEASUREMENT PERIOD) is extended (moved) to include a peak region of the total transmission power in a single period (see Fig. (b)). Transition times are also included in the period.
In Fig. 9, a transmission timing reference (slot transmission timing) of the HS-DPCCH is delayed by 75 microseconds with respect to a transmission timing reference (slot transmission timing) of the DPDCH. In other words, a transmission timing difference "b" between the DPDCH and the HS-DPCCH is 75 µs, which is different from Fig. 3. As the HS-DPCCH is transmitted after a 75 µs delay with respect to the DPDCH slot, both channels are transmitted (ON/OFF) almost simultaneously. In such a case, a peak power region having the total transmission power of the DPDCH and the HS-DPCCH is generated.

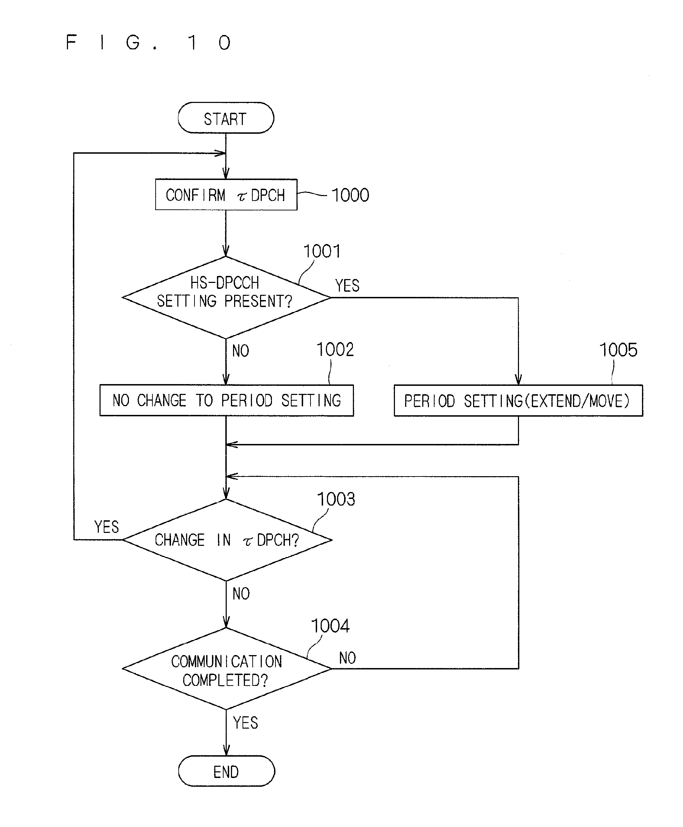

When the peak power appears in the total power of the DPDCH and the HS-DPCCH, the mobile station according to this embodiment extends (moves) the transmission power measurement period (MEASUREMENT PERIOD) to include the peak region of the total transmission power in a single period (see Fig. (b)). Fig. 10 is a flowchart of a process of controlling a transmission power measurement period performed by the mobile station according to the third preferred embodiment of the present invention. The process of changing a transmission power measurement period according to the second preferred embodiment is performed with the presence or absence of HS-DPCCH setting as a reference for changing the period.
The process shown in Fig. 10 described below is also performed with the presence or absence of HS-DPCCH setting as a reference for changing the period. The process of Fig. 10 is identical or equivalent to the process of Fig. 8 except step 1005, and descriptions of the identical or equivalent steps are not replicated below.

Turning to Fig. 10, it is determined whether the HS-DPCCH is set in uplink in step 1001. When the HS-DPCCH is not set ("NO" in step 1001), step 1002 and the subsequent steps are executed. When the HS-DPCCH is set ("YES" in step 1001), step 1005 is executed. In step 1005, the measurement control section 208 extends or moves the transmission power measurement period (MEASUREMENT PERIOD) to include the peak power region of the DPDCH and the HS-DPCCH in the same period. Transition times are also included in the period, thus eliminating exclusion time. The measurement control section 208 outputs the timing control information (Measurement period) to notify the power measurement section 207 of the moved (changed) transmission power measurement period. Then, step 1003 and the subsequent steps are executed.

Namely in this embodiment, the setting of a transmission power measurement (estimate) period is changed (extended/moved) depending on the presence or absence of HS-DPCCH setting. When the HS-DPCCH is set, the period is changed to include a peak of the total power of both channels. Further, a change in the total transmission power is defined by a difference between the average power of a reference slot and the average power of a target slot, with consideration given to the peak power of both channels. With HS-DPCCH setting, the timing of the measurement (estimate) period uses a period that includes transition times determined by the timings of both channels.

As described above, the transmission power measurement period is changed depending on the presence or absence of transmission setting of the HS-DPCCH having a different transmission timing from the uplink channels (DPDCH, DPCCCH) of Release 1999. When the slot transmission timings of the DPDCH and the HS-DPCCH are almost simultaneous, in particular, the period setting is changed (controlled) to include the peak region of the total power of both channels, thereby improving the accuracy of total transmission power control by the mobile station.

Although the mobile station determines whether to change the transmission power measurement period in the above description, the fixed station side may determine whether to change the period and notify the mobile station of the change.

### Fourth Preferred Embodiment

The mobile station according to the third preferred embodiment uses the presence or absence of the HS-DPCCH as a reference for changing the transmission power measurement period and, when the HS-DPCCH is set with a simultaneous transmission timing with the DPDCH, which leads to the generation of peak power, extends or moves the transmission power measurement period to include the peak region of the total transmission power of the DPDCH and the HS-DPCCH. A fixed station according to a fourth preferred embodiment described below changes a transmission power measurement period and notifies the mobile station of the change when some of the channels are not set for transmission, or when there are not a plurality of transmission timing references of a transmitted channel, in accordance with a transmission timing reference of the transmitted channel.

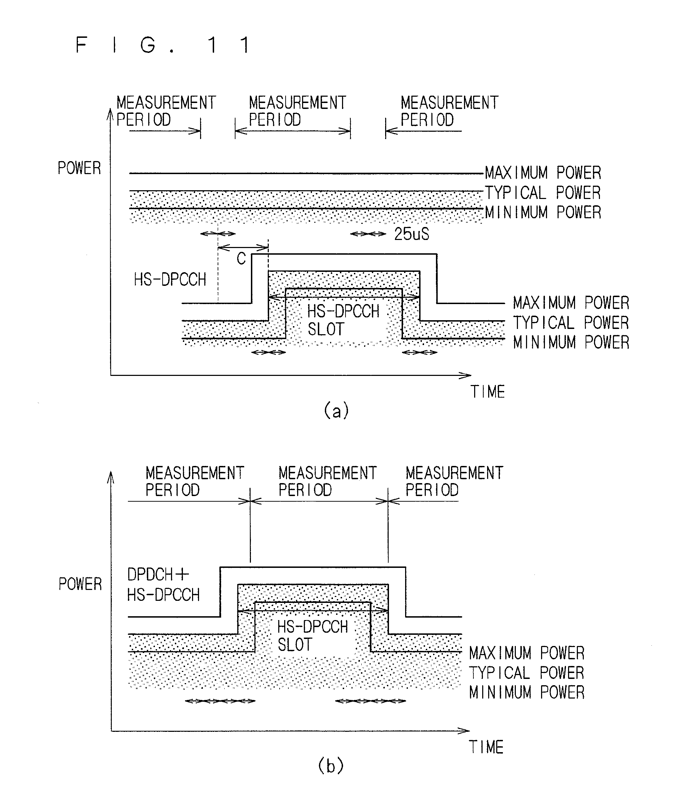

Fig. 11 illustrates changes over time in DPDCH power, HS-DPCCH power, and total transmission power of the DPDCH and the HS-DPCCH. Fig. 11 is to be understood the same way as Fig. 3 is, and a description of the way is not replicated below. In Fig. 11, the DPDCH is not set for transmission in the initial settings in advance of communication, and only the HS-DPCCH is transmitted. A slot transmission timing of the HS-DPCCH is delayed by 50 µs with respect to a slot transmission timing of the DPDCH.
Namely in Fig. 11, although the DPDCH is not transmitted, a transmission timing difference "c" between the DPDCH and the HS-DPCCH is 50 µs with the measurement period as a reference. When the DPDCH is not transmitted and the HS-DPCCH is transmitted, the transmission power measurement period (MEASUREMENT PERIOD) is moved to match the slot transmission timing of the HS-DPCCH (see Fig. 11 (b)). Note that the length of the transmission power measurement period is not changed.

The communication system performing the process of changing a transmission power measurement period according the fourth preferred embodiment is described. In advance of the start of communication, the initial settings of various radio resources such as channel settings, communication speed settings, and timing settings to be used for the communication are determined between the base station control device 104 and the radio resource control section 201 of the mobile station 102, based on a communication request from the mobile station 102 or the external network 112. The initial value of τDPCH, a timing offset for the DPDCH, is also determined.
The set offset information is notified to the base station (Node B) 103 and the mobile station (UE) 102 for the settings to be made at each station. The mobile station 102 stores the notified various setting information in the radio resource control section 201. The radio resource control section 201 outputs the setting information (CH_config) to the transmission setting evaluation section 202 and the measurement control section 208 in order to control operation settings of the respective sections of the mobile station 102. The measurement control section 208 places the transmission power measurement period in the initial state. Since the CPICH is used to synchronize the communicating cell and the mobile station 102, the mobile station understands the timing of the CPICH.

It is assumed that the period changing (controlling) function according to this embodiment is added to Release 5 or later. The release number to be added with the function may be any number and is not limited by this embodiment. Further, although the fixed station side determines whether to change the transmission power measurement period and notifies the mobile station 102 of setting information when changing the period in this embodiment, the mobile station 102 may determine whether to change the period.

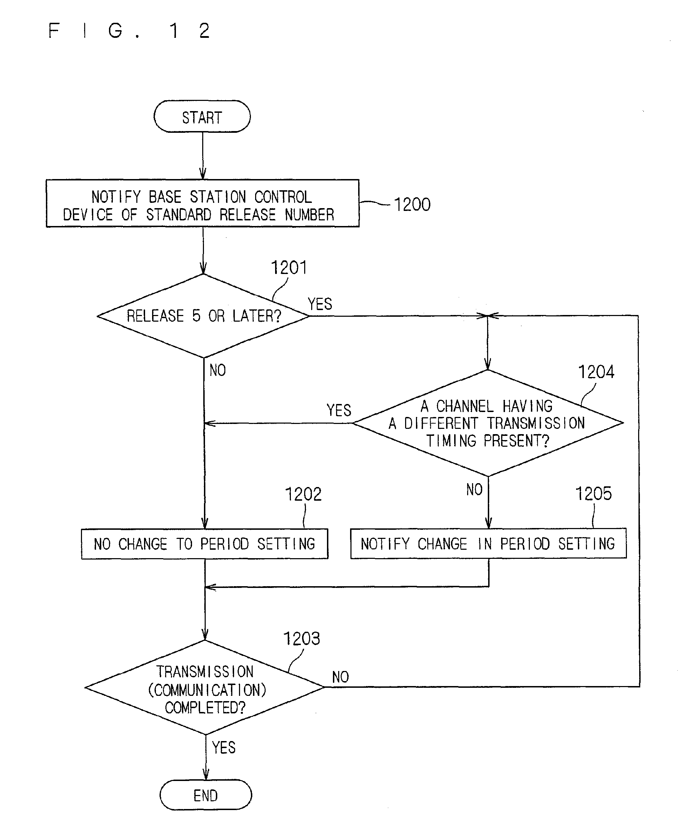

Fig. 12 is a flowchart of a process of controlling a transmission power measurement period performed by the fixed station according to the fourth preferred embodiment of the present invention. The process of Fig. 12 is identical or equivalent to the process of Fig. 10 except step 1200, step 1201 and step 1204, and descriptions of the identical or equivalent steps are not replicated below. In Fig. 12, the radio resource control section 201 of the mobile station 102 notifies the radio resource control section 301 on the fixed station side of release number (version) information about a specification applied to the mobile station (step 1200).
The radio resource control section 301 on the fixed station side determines whether the applied release number notified from the mobile station 102 is Release 5 or later (step 1201). When the applied release number notified from the mobile station 102 is Release 5 or 6 or later capable of setting the HSDPA ("YES" in step 1201), step 1204 is executed. When the applied release number notified from the mobile station 102 is not Release 5 or later ("NO" in step 1201), then the standard applied to the mobile station 102 is Release 4 or R99, and step 1202 and the subsequent steps are executed.

In step 1202, the power measurement section 207 estimates (measures) transmission power utilizing the channel amplitude coefficients (β) based on the period setting in accordance with the timing of a conventional DPDCH, and outputs the transmission power information (Estimated UE transmit power) to the transmission setting evaluation section 202. In step 1203, the radio resource control section 201 of the mobile station 102 monitors the completion of transmission from the mobile station. When the transmission (communication) has completed ("YES"), the control is completed, and when the transmission has not completed ("NO"), processing returns to step 1201.

When the applied release number notified from the mobile station 102 is Release 5 or later in step 1201, the radio resource control section 301 on the fixed station side determines whether a plurality of channels having different transmission timing references are set for transmission (step 1204). When a plurality of channels having different transmission timing references such as the DPDCH and the HS-DPCCH are set for transmission ("YES" in step 1204), for example, step 1202 is executed.
When a plurality of channels having different transmission timing references are not set for transmission ("NO" in step 1204), i.e. when the DPDCH is not transmitted and only the HS-DPCCH is transmitted as illustrated in Fig. 11, step 1205 is executed. In step 1205, the radio resource control section 301 on the fixed station side determines, when the transmitted channel (HS-DPCCH in Fig. 11) has a different timing of transition time from the transition time of the DPDCH, to change the transmission power measurement period to match the transition time of the transmitted channel (HS-DPCCH). The radio resource control section 301 then notifies the mobile station of information about the changed transmission power measurement period (period setting control information: Timing info).

In the mobile station 102 having received the period setting control information (Timing info) from the fixed station, the radio resource control section 201 outputs period setting information to the measurement control section 208. The measurement control section 208 outputs the timing control information (Measurement period) to the power measurement section 207. The power measurement section 207 changes the transmission power measurement period based on the input timing control information, and measures transmission power. The transmission power measurement period in the mobile station is changed by performing the above processing, which is followed by step 1203. A series of exchanges (RRC_signalling) when the mobile station changes the transmission power measurement period in accordance with an instruction from the fixed station undergoes the same processing as that shown in Fig. 6, and a description of the processing is not replicated below.

Namely in this embodiment, when one or more different transmission timing references are set but only a channel having one transmission timing reference is actually transmitted, the setting of a transmission power measurement (estimate) period is changed (moved) depending on the release number of a specification applied to the mobile station. Further, a change in the total transmission power is defined by a difference between the average power of a reference slot and the average power of a target slot. The timing of the measurement (estimate) period uses a period determined by the timing of a channel (HS-DPCCH in this embodiment) having one transmission timing reference being set or transmitted.

As described above, the transmission power measurement period is changed to match the transmission timing reference of a channel set for transmission, thus preventing a step-like change in the total transmission power during the measurement period. This only requires one-time total transmission power control and maximum transmission power control per period (or slot), thus preventing the structure of the mobile station from being complicated. Although the fixed station side determines whether to change the transmission power measurement period in the above description, the mobile station may determine whether to change the period.

### Fifth Preferred Embodiment

The fixed station according to the fourth preferred embodiment changes the transmission power measurement period and notifies the mobile station of the change when some of the channels are not set for transmission, or when there are not a plurality of transmission timing references of a transmitted channel, in accordance with a transmission timing reference of the transmitted channel, so that the mobile station having received the notification from the fixed station changes the transmission power measurement period. A fixed station according to a fifth preferred embodiment described below changes a transmission power measurement period and notifies the mobile station of the change when a difference in amplitude coefficient (gain factors: β) is great between a plurality of channels transmitted from the mobile station.

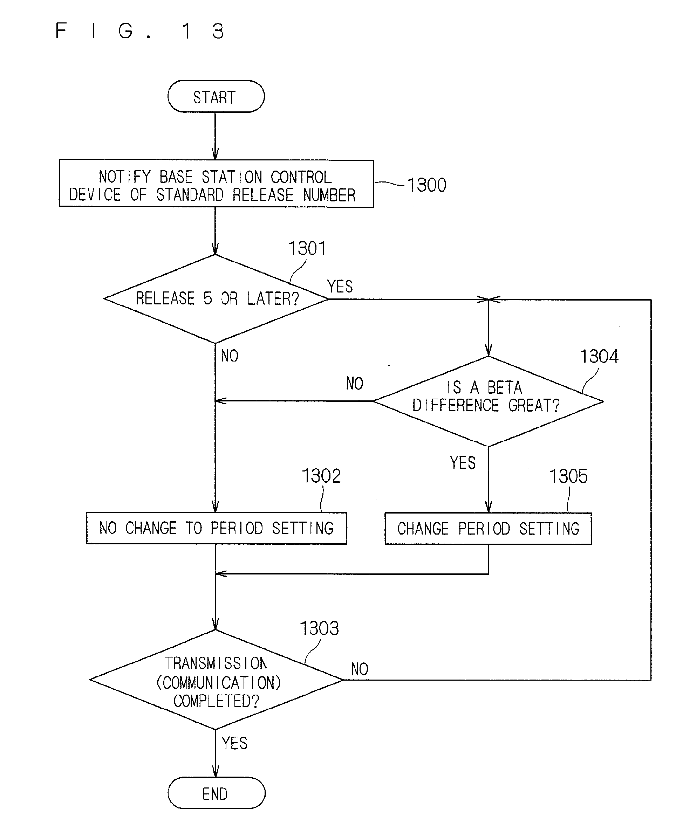

Fig. 13 is a flowchart of a process of controlling a transmission power measurement period performed by the fixed station according to the fifth preferred embodiment of the present invention. The process of Fig. 13 is identical or equivalent to the process of Fig. 12 except step 1304, and descriptions of the identical or equivalent steps are not replicated below. As mentioned with reference to Fig. 12, the initial settings of various radio resources such as channel settings, communication speed settings, and timing settings to be used for communication are determined in a like manner in advance of the start of communication.

In step 1304, the fixed station determines whether a difference in channel amplitude coefficient (gain factors: βd, βhs) is great between a plurality of channels (DPDCH, HS-DPCCH in this embodiment) transmitted in uplink from the mobile station 102. When the gain factor difference is small ("NO" in step 1304), step 1302 and the subsequent steps are executed. When the gain factor difference is great ("YES" in step 1304), step 1305 and the subsequent steps are executed. The reason is described below for using a difference in amplitude coefficient (gain factors: β) between a plurality of channels transmitted from the mobile station as a reference for determining whether to change the transmission power measurement period.
When the gain factor difference is small between the plurality of channels transmitted from the mobile station, the amount of variation is small in the pulse-like power transition as illustrated in the first and second preferred embodiments, or in the total transmission power due to the generation of a peak region as illustrated in the third and fourth preferred embodiments, resulting in small spuriousness and error in power measurement.
It is therefore not necessary to change the transmission power measurement period. When the gain factor difference is great between the plurality of channels transmitted from the mobile station, however, the amount of variation increases in the pulse-like power transition or in the total transmission power of the peak region, resulting in great spuriousness and error in power measurement. Thus arises a need to change the transmission power measurement period when the gain factor difference is great between the plurality of channels transmitted from the mobile station.

When the gain factor difference is great between the plurality of channels transmitted from the mobile station ("YES" in step 1304), step 1305 is executed. In step 1305, the measurement control section 208 extends or moves the transmission power measurement period to include the peak power region of the DPDCH and the HS-DPCCH in a single transmission power measurement period. The measurement control section 208 outputs the timing control information (Measurement period) in accordance with the moved transmission power measurement period to the power measurement section 207. Then, step 1303 is executed.

As described above, the transmission power measurement period is changed depending on the degree of the gain factor difference between the plurality of channels transmitted from the mobile station. This allows the period to be changed depending on the magnitude of peak power. Therefore, the transmission power measurement period needs to be changed only when the amount of power variation is great, thereby reducing the frequency of changing the period.

Although the transmission power measurement period is set in step 1305 in the same way as in the fourth preferred embodiment, the period may be controlled as in the first to third preferred embodiments and is not limited by this embodiment. In addition, a gain factor may be considered by various ways such as considering a maximum gain factor, and is not limited by this embodiment. Further, although the fixed station side determines whether to change the transmission power measurement period in the above description, the mobile station may determine whether to change the period.

### Sixth Preferred Embodiment

The setting and changing of a transmission power measurement period is applied to a communication system provided with an E-DCH (Enhanced-DCH), which is under consideration for addition in Release 6. The E-DCH is an additional channel intended for faster and more efficient packet transmission in uplink.

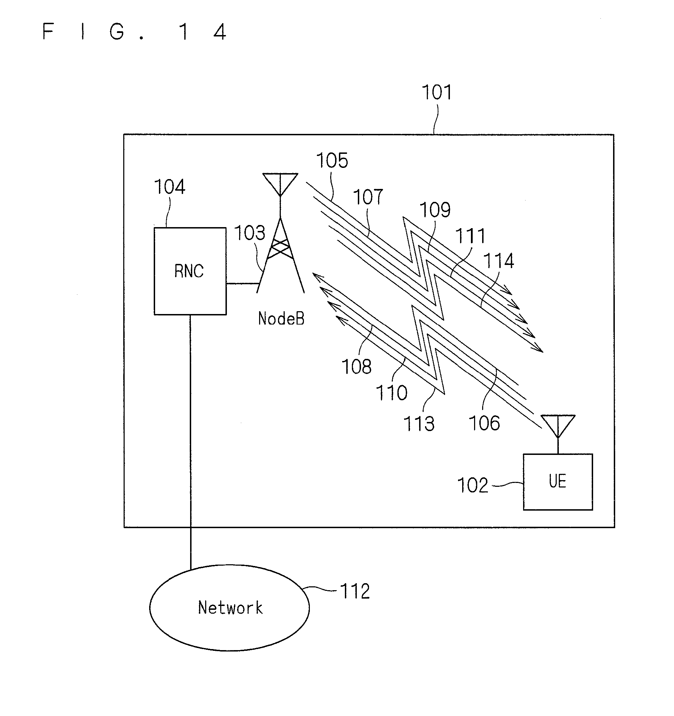

Fig. 14 illustrates a communication system according to a sixth preferred embodiment of the present invention. The difference over Fig. 1 is that an E-DPDCH/E-DPCCH 113 is added as a new uplink channel, and an E-HIGH (Enhanced Hybrid ARQ Indicator CHannel) 114 as a new downlink channel. Like references to those in Fig. 1 indicate like or similar elements in Fig. 14, and descriptions of the like or similar elements are not replicated below. The E-DPDCH/E-DPCCH 113 is a physical channel (E-DPDCH: Enhanced DPDCH) for transmitting packet data, and a physical channel (E-DPCCH: Enhanced DPCCH) for transmitting transmission-format information in transmitting data. The E-HIGH 114 transmits a packet reception determination result (ACK/NACK) from the base station 103. The E-DPDCH has a gain factor βeu, and the E-DPCCH has a gain factor βec. The E-DPDCH is processed by the mobile station and fixed station the same way as the DPDCH is.

A transmission unit time under consideration for the E-DPDCH 113 is 10 ms, which is the same as that for the DCH (thus DPDCH and DPCCH), or 2 ms, which is the same as that for the HS-PDSCH. Although not finalized yet, 10 ms or 2 ms is likely to be adopted for the E-DPCCH 113 and the E-HICH 114. Ten ms is called one frame. Since a transmission power measurement period of the mobile station is one slot (1 slot = one-fifteenth of 10 ms = one-third of 2 ms), the period can be controlled the same way as the DPDCH is in the first to fifth preferred embodiments. When the transmission unit time is 10 ms, a transmission timing of the E-DPDCH 113 adopts the same reference timing as the DPCCH. When the transmission unit time is 2 ms, a fivefold reference timing is the same as the DPCCH. The E-DPCCH, which is transmitted together with the E-DPDCH, can be handled together with the E-DPDCH.

As described above, the E-DPDCH has the same transmission power measurement period as the DPDCH and the DPCCH. Thus the same effects are obtained when transmitting the E-DPDCH instead of the DPDCH according to the first to fifth preferred embodiments. Likewise, the same effects are obtained by extending and applying the methods according to the first to fifth preferred embodiments when the DPDCH and the E-DPDCH coexist.

### Seventh Preferred Embodiment

In the first to sixth preferred embodiments, a single measurement (estimate) period is properly set depending on the presence or absence of change of a measurement period. In this embodiment, a plurality of period settings are used by dividing time, to perform a plurality of power measurements (estimates) with time division. The division timing uses the transmission timing references of both the DPDCH/DPCCH and the HS-DPCCH. As combination of settings, movement, extension, the presence or absence of the inclusion of transition periods, and the presence or absence of the inclusion of a peak region according to the first to sixth preferred embodiments, are used in combination.
The measurement control section 208 notifies the power measurement section 207 of the timing control information (Measurement period) at the above division timing. The separation into a period over which the DPDCH is transmitted but the HS-DPCCH is not, and a period over which both channels are transmitted allows a transmission power difference between the both periods to be precisely controlled. In addition, a difference between the average power and peak power can be reduced over the respective time periods separated by a plurality of transmission timing references.
As described above, a plurality of measurement (estimate) period settings are used with time division. This allows an optimum TFC evaluation algorithm to be flexibly selected with respect to the structure of the transmission channel in implementation of the mobile station, thereby controlling the transmission power further precisely.

### Eighth Preferred Embodiment

In the eighth preferred embodiment, a plurality of period settings are used as in the seventh preferred embodiment. The difference over the seventh preferred embodiment is that the plurality of period settings are used in parallel, to perform a plurality of power measurements (estimates) in parallel. A plurality of pieces of measurement information are used by:
(1) subjecting both power measurement (estimate) values to arithmetic averaging such as weighted averaging to derive a single measurement (estimate) result, and using the result at the transmission setting evaluation section 202, or
(2) switching both power measurement (estimate) values at a timing and using the values at the transmission setting evaluation section 202, or the like.
   It is also possible to select setting based on the implementation of the fixed station side and notify the base station and the mobile station of the selection, to make the setting. When the DCH and the E-DCH according to the sixth preferred embodiment are set, for example, conventional settings may be adopted for TFC evaluation of the DCH (DPDCH), and the changed settings for E-TFC evaluation of the E-DCH (E-DPDCH).
   As described above, a plurality of settings are used in parallel. This allows an optimum TFC evaluation algorithm to be selected with respect to the respective transmission conditions of the channels having difference transmission timing references in implementation, thereby controlling the transmission power further precisely.
   Although the measurement (estimate) is used only at the transmission setting evaluation section 202 in the above preferred embodiments, the method of using a plurality of settings according to the seventh and eighth preferred embodiments may be used for the transmission power control at the transmission section 205, or may be used for both the transmission setting evaluation section 202 and the transmission section 205. This allows further precise transmission power control.

### Industrial Applicability

The present invention is applicable to a variety of mobile transmission terminal equipment such as mobile telephones.

## Claims

1. A method of controlling transmission power, comprising:
- a transmission power measurement process of measuring transmission power during a transmission power measurement period, the period being set with a slot of an uplink dedicated physical channel as a reference, the channel transmitting user data with a time difference designated with reference to a common pilot channel transmitted from a base station by a fixed station side;
- a transmission control process of evaluating and determining a usable data transmission speed for the uplink dedicated physical channel based on a transmission power measurement result measured in the transmission power measurement process, and performing a modulation process and transmission power control in accordance with the determined data transmission speed; and
- a transmission power measurement control process of changing the transmission power measurement period in accordance with a channel set in uplink other than the uplink dedicated physical channel from a mobile station to the fixed station side.

2. The method of controlling transmission power according to claim 1,
wherein the transmission power measurement control process changes the transmission power measurement period based on a transmission timing difference between the slot of the uplink dedicated physical channel and a slot of an uplink control channel, the uplink control channel transmitting control data including a reception result of a high-speed packet data channel set in downlink from the fixed station side to the mobile station.

3. The method of controlling transmission power according to claim 1,
wherein the transmission power measurement period is a period that excludes transition times provided before and after a time period of slot transmission, and
wherein the transmission power measurement process measures average power over the transmission power measurement period.

4. The method of controlling transmission power according to claim 3,
wherein, when a transmission timing difference between the slot of the uplink dedicated physical channel and a slot of an uplink control channel is smaller than a prescribed value, the transmission power measurement control process changes the transmission power measurement period to include a period that excludes transition times of both the slot of the uplink dedicated physical channel and the slot of the uplink control channel.

5. The method of controlling transmission power according to claim 1,
wherein the transmission power measurement control process determines whether a high-speed packet data channel and an uplink control channel are set, and changes the transmission power measurement period when the high-speed packet data channel and the uplink control channel are set.

6. The method of controlling transmission power according to claim 1,
wherein, when the slot of the uplink dedicated physical channel and a slot of an uplink control channel are transmitted at almost simultaneous timing, the transmission power measurement control process changes the transmission power measurement period to include a peak of total transmission power of the slot of the uplink dedicated physical channel and the slot of the uplink control channel.

7. The method of controlling transmission power according to claim 1,
wherein, when only a transmission channel set other than the uplink dedicated physical channel is transmitted, the transmission power measurement control process changes the transmission power measurement period set with the slot of the uplink dedicated physical channel as a reference to a transmission power measurement period with a slot of the transmission channel as a reference.

8. The method of controlling transmission power according to claim 1,
wherein the transmission power measurement control process changes the transmission power measurement period based on an amplitude coefficient difference between the uplink dedicated physical channel and an uplink control channel.

9. The method of controlling transmission power according to claim 1,
wherein the transmission power measurement control process changes the transmission power measurement period based on the specifications of a standard applied to the mobile station.

10. A mobile station comprising:
- a transmission power measurement section for measuring transmission power during a transmission power measurement period, the period being set with a slot of an uplink dedicated physical channel as a reference, the channel transmitting user data with a time difference designated with reference to a common pilot channel transmitted from a base station by a fixed station side;
- a transmission control section for evaluating and determining a usable data transmission speed for the uplink dedicated physical channel based on a transmission power measurement result measured by the transmission power measurement section, and performing a modulation process and transmission power control in accordance with the determined data transmission speed; and
- a transmission power measurement control section for outputting the transmission power measurement period to the transmission power measurement section, the period having been changed in accordance with a channel set in uplink other than the uplink dedicated physical channel from a mobile station to the fixed station side.

11. The mobile station according to claim 10,
wherein the transmission power measurement control section outputs the transmission power measurement period to the transmission power measurement section, the period having been set based on a period setting control signal included in a reception signal transmitted from the fixed station.

12. The mobile station according to claim 10,
wherein the transmission power measurement control section changes the transmission power measurement period based on a transmission timing difference between the slot of the uplink dedicated physical channel and a slot of an uplink control channel, the uplink control channel transmitting control data including a reception result of a high-speed packet data channel set in downlink from the fixed station side to the mobile station.

13. The mobile station according to claim 10,
wherein the transmission power measurement control section determines whether a high-speed packet data channel and an uplink control channel are set, and changes the transmission power measurement period when the high-speed packet data channel and the uplink control channel are set.

14. The mobile station according to claim 10,
wherein, when the slot of the uplink dedicated physical channel and a slot of an uplink control channel are transmitted at almost simultaneous timing, the transmission power measurement control section changes the transmission power measurement period to include a peak of total transmission power of the slot of the uplink dedicated physical channel and the slot of the uplink control channel.

15. The mobile station according to claim 10,
wherein, when only a transmission channel set other than the uplink dedicated physical channel is transmitted, the transmission power measurement control section changes the transmission power measurement period set with the slot of the uplink dedicated physical channel as a reference to a transmission power measurement period with a slot of the transmission channel as a reference.

16. The mobile station according to claim 10,
wherein the transmission power measurement control section changes the transmission power measurement period based on an amplitude coefficient difference between the uplink dedicated physical channel and an uplink control channel.

17. The mobile station according to claim 10,
wherein the transmission power measurement control section changes the transmission power measurement period based on the specifications of a standard applied to the mobile station.

18. A fixed station comprising:
- a radio resource control section for generating setting information, the information including at least amplitude coefficients of an uplink dedicated physical channel transmitted by a mobile station and an uplink control channel for transmitting control data including a reception result of a high-speed packet data channel set in downlink to the mobile station, and transmission timing at which the mobile station transmits the uplink dedicated physical channel; and
- a transmission section for transmitting the setting information generated by the radio resource control section to the mobile station,
wherein the radio resource control section changes a transmission power measurement period in accordance with a channel set other than the uplink dedicated physical channel, the period being a time period set with a slot of the uplink dedicated physical channel as a reference and for measuring transmission power transmitted in uplink by the mobile station.

19. The fixed station according to claim 18,
wherein the radio resource control section changes the transmission power measurement period based on a transmission timing difference between the slot of the uplink dedicated physical channel and a slot of the uplink control channel notifying the control data on the high-speed packet data channel set in downlink to the mobile station.

20. The fixed station according to claim 18,
wherein the radio resource control section determines whether the high-speed packet data channel and the uplink control channel are set, and changes the transmission power measurement period when the high-speed packet data channel and the uplink control channel are set.

21. The fixed station according to claim 19,
wherein, when the slot of the uplink dedicated physical channel and a slot of the uplink control channel are transmitted at almost simultaneous timing, the radio resource control section changes the transmission power measurement period to include a peak of total transmission power of the slot of the uplink dedicated physical channel and the slot of the uplink control channel.

22. The fixed station according to claim 18,
wherein, when only a transmission channel set other than the uplink dedicated physical channel is transmitted, the radio resource control section changes the transmission power measurement period set with the slot of the uplink dedicated physical channel as a reference to a transmission power measurement period with a slot of the transmission channel as a reference.

23. The fixed station according to claim 18,
wherein the radio resource control section changes the transmission power measurement period based on an amplitude coefficient difference between the uplink dedicated physical channel and the uplink control channel.

24. The fixed station according to claim 18,
wherein the radio resource control section changes the transmission power measurement period based on the specifications of a standard applied to the mobile station.

25. A communication system comprising:
a mobile station, the mobile station comprising
- a transmission power measurement section for measuring transmission power during a transmission power measurement period, the period being set with a slot of an uplink dedicated physical channel as a reference, the channel transmitting user data with a prescribed time difference in response to a common pilot channel,
- a transmission control section for evaluating and determining a usable data transmission speed for the uplink dedicated physical channel based on a transmission power measurement result measured by the transmission power measurement section, and performing a modulation process and transmission power control in accordance with the determined data transmission speed, and
- a transmission power measurement control section for outputting the transmission power measurement period to the transmission power measurement section, the period having been changed in accordance with a channel set in uplink other than the uplink dedicated physical channel; and
a fixed station, the fixed station comprising
- a radio resource control section for generating setting information, the information including amplitude coefficients of the uplink dedicated physical channel transmitted by the mobile station and an uplink control channel for transmitting control data including a reception result of a high-speed packet data channel set in downlink to the mobile station, transmission timing at which the mobile station transmits the uplink dedicated physical channel, and the transmission power measurement period having been changed in accordance with the channel set other than the uplink dedicated physical channel, and
- a transmission section for transmitting the setting information generated by the radio resource control section to the mobile station.
